# EUROPEAN PATENT SPECIFICATION

(11) **EP 3 762 208 B1**
(45) Date of publication and mention of the grant of the patent: **20.09.2023**
(21) Application number: 19712291.4
(22) Date of filing: 28.02.2019
(51) Int. Cl.: B29C 48/285, B29C 48/29, B29C 48/797, B29B 7/94

(54) **ASSEMBLY AND METHOD FOR INJECTING A FLUID INTO MOLTEN POLYMERIC MATERIALS**
VORRICHTUNG UND VERFAHREN ZUM EINSPRITZEN EINES FLUIDS IN EINE POLYMERSCHMELZE
DISPOSITIF ET MÉTHODE POUR INJECTER UN FLUIDE DANS UN MATÉRIAU POLYMÉRIQUE FONDU

(30) Priority: 08.03.2018 GB 201803718
(43) Date of publication of application: 13.01.2021
(73) Proprietor: Colormatrix Holdings, Inc., Wilmington, DE 19801 (US)
(72) Inventor: JONES, Brian, Knowsley, Merseyside L34 9GT (GB); WHITEHEAD, David, Warrington, Merseyside WA3 2TW (GB); CAMPBELL, Ian, Knowsley, Merseyside L34 9GT (GB); LOFTUS, David, Formby, Merseyside L37 3NR (GB); OVEREND, Andrew, Bolton, Lancashire BL5 2ED (GB)
(74) Representative: Appleyard Lees IP LLP
(86) International application number: PCT/IB2019/051596
(87) International publication number: WO 2019/171217

(56) References cited:
- DE-A1-102009 045 122
- GB-A- 960 187
- JP-A- S6 195 923
- US-B1- 6 182 685

## Description

This invention relates to polymeric materials and particularly, although not exclusively, relates to an assembly for and a method of injecting a fluid, for example a liquid formulation including one or more colourants, into molten polymeric materials.

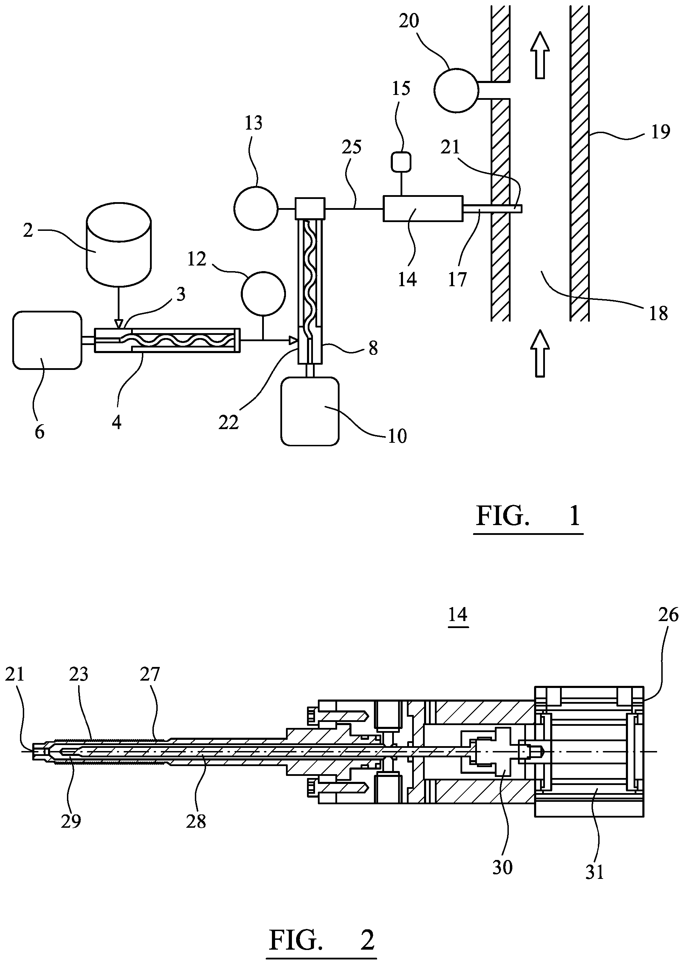

Injection apparatus for injecting a liquid formulation into a molten polymer, at high pressure, is shown in Figure 1. The apparatus includes a reservoir 2 which contains the liquid formulation at ambient temperature and pressure and is arranged to flood feed pump body 3 of a first progressing cavity pump (pcp) 4. The first pcp 4 is driven by a motor 6 and is arranged to accurately meter the liquid formulation into a second pcp 8 which is downstream of the first pcp, is driven by a motor 10 and is arranged to increase the pressure of the liquid formulation up to 200 bar or more. A pressure transducer 12 is positioned in a flow line between the first and second peps 4, 8.

Adjacent an outlet of the second pcp 8 is provided a second pressure transducer 13 which is arranged to monitor pressure of fluid exiting the second pcp 8.

Downstream of pump 8 is an injector 14, controlled by an actuator 15 and arranged to control passage of liquid formulation, via conduit 17 and outlet 21, into a pressurized molten polymer stream 18 which is present within an extruder 19 provided downstream of outlet 21. Conduit 17 is screw-threadedly engaged in the wall of the extruder. The extruder includes an associated pressure transducer 20 for monitoring the pressure of the polymer stream.

In use, the apparatus is controlled so the first pcp acts as a metering pump. It is driven to deliver a continuous stream of the liquid formulation accurately and in accordance with the real-time throughput of the polymer in the extruder 19, thereby to accurately delivery liquid formulation, including relevant additives, into the polymer, prior to the polymer being extruded into products such as sheet products, profile products and textile filaments.

Pressure within the pressurized molten polymer stream within the extruder will be significantly greater than the pressure which is deliverable by the first pcp 4. So, when the apparatus is initially operated, injector 14 is closed and therefore isolates the apparatus from the pressurized molten polymer stream. First pcp 4 is operated to meter liquid formulation against inlet 22 of the second pcp 8, with the pressure between first and second pumps 4, 8 being monitored by pressure transducer 12. The pressure is allowed to rise at pressure transducer 12 until a pre-set pressure is achieved. This pre-set pressure is relatively low and is selected to match the preferred discharge pressure capability of pump 4. It is typically 2-3 bar.

Once the pre-set pressure is reached, the second pcp 8 is driven by motor 10 to convey liquid formulation away from pressure transducer 12/inlet 22, while maintaining the pre-set pressure as measured by pressure transducer 12. The speed of motor 10 is continuously adjusted using a proportional-integral-derivative (P.I.D.) loop control to maintain the pre-set pressure at transducer 12 as accurately as possible, since it is found that maintaining a constant and actively controlled discharge pressure of the first pump 4 optimises the metering accuracy of the pump 4.

As pump 8 conveys liquid formulation away from pump 4, pressure is generated within the closed injector 14. The pressure is monitored by second pressure transducer 13. The injector 14 remains closed until the pressure at transducer 13 is equal to or slightly above the pressure of the molten polymer stream in the extruder 19. The pressure of the molten polymer may be assessed by a further pressure transducer 20. Alternatively, the pressure of the polymer may be known for a given set of polymer processing conditions and then programmed into the injection apparatus.

Once the pressure of the liquid formulation at transducer 13 reaches a suitable level (i.e. at or above the pressure of the molten polymer stream), actuator 15 is operated to open injector 14, thereby allowing liquid formulation to flow into the molten polymer stream. Consequently, the pressure of the liquid formulation at transducer 13 will immediately equalise with the pressure of the molten polymer stream in the extruder 19 at the position of injection. During this time, the rotational speed of pump 8 will be modulated as required to maintain the pre-set pressure at transducer 12.

Referring to Figure 2, the injector 14 may include an externally screw-threaded region 23 adjacent outlet 21 at one end and, at its other end, is arranged to be connected to upstream conduit 25 (Figure 1) via a coupling housing 26 so that liquid formulation can pass from conduit 25 into the injector.

The injector includes an elongate conduit 27 in which an elongate valve pin 28 having a pointed end 29 is slideably arranged. The pointed end is arranged to extend within outlet 21 so it is capable of expelling all liquid formulation from conduit 27. The pin 28 is operatively connected to an adaptor 30 and pneumatic cylinder 31 which is operable to move pin 28 towards and away from outlet 21 to close/open the outlet and to control ejection of liquid formulation from the injector.

Although the apparatus described in Figures 1 and 2 works well for many types of liquid formulations, it has been discovered that when certain liquid formulations, for example including particular vehicles and/or dyes or pigments are used, injector 14 may become blocked. Additionally, blocking of injector 14 is found to be more likely to occur when liquid formulations are being injected into molten polymeric material at relatively low let-down-ratios (LDRs).

A fully blocked (or partially blocked) injector can be highly problematic and must be cleaned. This generally necessitates it being disconnected from the extruder and cleaned. However, prior to disconnection, the pressure of the polymer flowing through the extruder must be reduced and processes downstream of the extruder (e.g. associated with spinning or sheet formation) must be stopped. Then, after cleaning, the injector can be re-connected, polymer pressure in the extruder increased and processes downstream of the extruder re-started. The down-time during cleaning may be 1-2 hours, meaning a significant amount of production of, for example fibre or sheet, can be lost. Given that in, for example spinning, one extruder may feed six to twelve spinning heads, the lost production could be significant.

It is an object of preferred embodiments of the present invention to address the above described problems.

GB960187A discloses an assembly according to the pre-characterising part of claim 1.

According to a first aspect of the invention there is provided an assembly as described in claim 1.

The cooling fluid is suitably arranged to obviate a potentially detrimental rise in temperature of the conduit and/or a fluid formulation present therewithin.

Said containing means includes a wall (A) which suitably defines a region for containing molten polymer. Said apparatus is secured relative to, more preferably directly to, the wall (A).

Said conduit of said injection device suitably extends within the wall (A). Said conduit preferably extends from a first side of the wall (A) to a second side of wall (A), wherein said first side is an outer wall which suitably is arranged not to contact polymer which may be contained in the containing means in use and said second side defines a volume, for example a passageway, in which polymer is disposed and/or flows in use. Thus, said second side of wall (A) suitably contacts polymer in use.

Said containing means is preferably part of a melt-processing apparatus. Such an apparatus may be for forming the molten polymer into a predetermined shape, for example an extrusion or other moulding. Said containing means into which said apparatus for injecting may inject fluid formulation may be part of, or associated with, an extruder. It may be an extruder channel, or barrel; it may be a mixer in which molten polymer may be arranged, in use, for mixing with the fluid formulation. The mixer may be any dynamic or static mixer, with a cavity transfer mixer being preferred. Said containing means may be part of an injection moulding machine, compression moulding machine, extrusion blow moulding machine or other polymer forming equipment. Said apparatus for injecting may be associated with an extruder, a suitable port within a nozzle, a forming die, a moulding machine shooting pot, a moulding machine transfer valve, an injection mould tool, a compression moulding tool, a machine extruder, a compression moulding machine or a pump, for example a gear pump.

Said conduit preferably includes an opening via which fluid formulation may be injected into molten polymer in the containing means, wherein, preferably, said opening has a mouth which opens directly into a region in said containing means in which molten polymer flows and/or is positioned in use. Thus, said opening in said conduit is preferably aligned with second side of wall (A). Said opening in said conduit preferably has a diameter of at least 2mm, for example at least 3mm. The diameter may be less than 8mm, for example less than 5mm. The aforementioned diameter suitably refers to the diameter at the narrowest point. Said opening may have a cross-sectional area at its narrowest point in the range 12mm² to 200mm², more preferably in the range 12 to 50mm².

Said conduit preferably includes an outer face which is suitably at an extremity of the conduit and wherein, preferably, said opening via which fluid formulation may be injected into molten polymer extends through the outer face. Said outer face suitably faces in the direction in which fluid formulation is injected out of the apparatus for injecting into said containing means. At least part of (preferably substantially the entirety of) said outer face is preferably contiguous with second side of wall (A).

Preferably, said outer face of said conduit is substantially planar and, preferably, the plane of the outer face is within the same plane as that of the second side of wall (A). Said outer face is preferably annular, suitably with the centre of the annulus defining an opening through which fluid formulation passes in use. Preferably, substantially no step is defined between the outer face of the conduit and the immediately surrounding area defined by the second side of wall (A). The aforementioned arrangement suitably allows the injection device to deliver directly into polymer contained in use in the containing means and/or helps to reduce the risk of blockages.

At an end of said conduit which includes said outer face, the conduit may define a first cylindrical region wherein said first cylindrical region is preferably circularly cylindrical. In the assembly, said first cylindrical region suitably engages (preferably substantially sealingly engages) a corresponding opening in wall (A), for example an opening which is adjacent the second side of wall (A) and/or which opening opens into the passageway in which polymer flows in use. The corresponding opening in wall (A) suitably defines a seat which engages the first cylindrical region.

The end of the conduit which includes said outer face is preferably seated upon a corresponding socket defined in the wall (A), wherein the socket includes an opening adjacent the second side of wall (A) and/or which opening opens into the passageway in which polymer flows in use.

At said end of said conduit which include said outer face, the conduit may include said first cylindrical region and, upstream thereof, a second cylindrical region. Preferably, a step is arranged between the first and second cylindrical regions. Preferably, said second cylindrical region has a larger diameter than the first cylindrical region. There may be a frusto-conical region between the first and second cylindrical regions.

Preferably, the first and second cylindrical regions (and said frusto-conical region if provided) are seated upon walls of said socket defined in the wall (A)

Said first cylindrical region preferably includes substantially smooth walls which are preferably not screw-threaded.

Said second cylindrical region preferably includes substantially smooth walls which are preferably not screw-threaded.

Said frusto-conical region preferably includes substantially smooth walls which are preferably not screw-threaded.

Said conduit preferably is not arranged to be directly screwed into the wall (A). Said conduit preferably does not include any screw-threaded region. Said conduit is preferably not directly screw-threadedly engaged in wall (A). Said conduit preferably does not include any screw-threaded region at all.

As described, preferably said containing means includes a wall (A) which includes a first side and a second side, where said second side defines a passageway in which polymer is disposed and/or flows, in use. Said cooling fluid passageway as described in (iv) above is preferably arranged, at least in part, within wall (A), and suitably extends between first side and second side of wall (A). Said cooling fluid passageway may extend from a first position which is spaced from said first side of wall (A) (and is suitably outside wall (A)) to a second position which is within wall (A) (e.g the passageway is embedded in wall (A)). Said cooling fluid passageway may include an inlet for fluid which is spaced from said first side of wall (A) and, preferably, an outlet for fluid which is also spaced from said first side of wall (A) (and is suitably outside wall (A)).

One wall (referred to as wall W1) of the said cooling fluid passageway is defined, at least in part, by said conduit arranged to deliver fluid formulation into molten polymer. Wall W1 defines an internal wall of the cooling fluid passageway. Said conduit includes a wall having a first surface (e.g. cylindrical surface) which is an internal surface of the conduit and is arranged to contact fluid formulation as it passes through the conduit, prior to injection of the fluid formulation into molten polymer. Said wall of said conduit includes a second surface which is an external surface of the conduit and/or faces outwardly and does not contact the fluid formulation as it passes through the conduit. Said second surface of said wall of said conduit preferably defines at least part of wall W1. The arrangement is such that cooling fluid in the cooling fluid passageway in use directly contacts said second surface of said wall of said conduit as described.

Said second surface of said wall of said conduit may be substantially smooth. Said second surface may be substantially cylindrical or, preferably, is configured to have an increased surface area compared to that of a cylinder. Said second surface preferably includes a series of projections, for example vanes. The projections may be elongate and suitably extend in the direction of flow of cooling fluid through the cooling fluid passageway which is associated with (eg arranged around) the conduit. The projections preferably define a series of flow channels which are preferably elongate. The flow channels may be arranged for passage of cooling fluid from an inlet to an outlet, via a region of the cooling fluid passageway which is embedded within wall (A) of said containing means as described above. Preferably, the flow channels are arranged for passage of cooling fluid from said inlet to said outlet, via a region of the cooling fluid passageway which is at or adjacent an outlet, for example an outer face of said conduit. For example, the flow passageway may come to within a distance of less than 3cm for example of less than 2cm from the outer face of said conduit which is suitably at an extremity of the conduit as described. The outer face of the conduit suitably faces into the containing means and/or into molten polymer in the container means in use.

Wall W2 is preferably cylindrical. It is preferably substantially smooth. Wall W2 is suitably arranged to contact cooling fluid in use.

Wall W2 is part of a securement device by means of which the conduit of said injection device is secured, preferably releasably secured, in position. Said securement device comprises a screw-threaded region which is arranged to screw-threadedly engage the containing means, for example wall (A) of said containing means (when provided). Thus, wall (A) of said containing means is preferably screw-threaded for releasably engaging the securement device. Said securement device preferably comprises a sleeve nut, the sleeve of which extends around the conduit and suitably defines wall W2. Said sleeve nut may include a screw-threaded region which has a diameter of at least 10mm, preferably at least 15mm, more preferably at least 19mm. The diameter may be less than 50mm, less than 40mm or less than 30mm.

Said conduit preferably includes a projection, for example a collar, suitably on an outwardly facing surface thereof. The securement device is preferably arranged to contact the collar and apply a force to the projection (and thereby to the conduit) to urge the conduit into sealing engagement with the containing means, for example in wall (A) of said containing means.

The securement device preferably includes an inlet for passage of cooling fluid into said cooling fluid passageway and an outlet for passage of cooling fluid out of the cooling fluid passageway. Said cooling fluid passageway may have a maximum width measured perpendicular to an elongate axis of the conduit of less than 1 cm, for example less than 0.8 cm. The maximum width may suitably be measured midway between an inlet into said passageway and a lowermost end of the passageway which is closest to an opening in said conduit via which fluid formulation is injected, in use, into molten polymer in the containing means.

Said wall W2 is preferably movable between an operative position in which it is secured within wall (A) and defines part of said cooling fluid passageway around the conduit and a second inoperative position wherein it is withdrawn from the operative position. The wall W2 is preferably movable between its operative and inoperative positions, for example in a direction which is parallel to an elongate axis of said conduit of said injection device.

In a preferred embodiment, said apparatus for injecting a fluid formulation comprises said conduit and said securement device (wherein suitable said conduit and securement device are separate and/or separable components), wherein said conduit defines wall W1 of said cooling fluid passageway and said securement device defines wall W2 of said cooling fluid passageway, wherein preferably said cooling fluid passageway is solely defined by the conduit and said securement device and no other component of the apparatus for injecting. Said conduit may be monolithic. Said securement device may be monolithic.

The assembly may include a pipe which is operatively connected to said cooling fluid passageway. Said pipe is preferably connected to a source of cooling fluid. Said cooling fluid herein described is preferably a gas when flowing, in use, within the cooling fluid passageway. Said cooling fluid may comprise compressed air or nitrogen.

Said containing means may contain molten polymer.

Preferably, said polymer comprises a synthetic thermoplastic polymer. Said polymer is preferably able to be formed into fibres. Said polymer may be a condensation polymer, for example a condensation polymer which may depolymerise in the presence of water and/or a carrier with appropriate functional groups (which could include but is not limited to hydroxyl and carboxylic acid species). Said polymer may be selected from polyesters, polyamides, polyalkylene polymers (e.g polypropylene and polyethylene), polycaprolactone, polycarbonates, acrylics and aramids. In one preferred embodiment, said polymer is a polyester.

Said polymer preferably comprises a polyester which may be selected from poly(ethylene terephthalate) (PET), poly(butylene terephthalate) (PBT), poly(trimethylene terephthalate) (PTT), poly( ethylene naphthalate) (PEN), poly(1 ,4-cyclo-hexylenedimenthylene) terephthalate (PCT), poly(ethylene-co-1 ,4-cyclohexylenedimethylene terephthalate) (PETG), copoly(1 ,4-cyclohexylene dimethylene/ethylene terephthalate) (PCTG), poly(1 ,4-cyclohexylene dimethylene terephthalate-co-isophthalate) (PCTA), poly(ethylene terephthalate-co- isophthalate (PETA), poly(lactic acid (PLA), poly(glycolic acid) (PGA) and their blends of copolymers. Said polymer preferably comprises, more preferably consists essentially of PET.

A typical spinnable condensation polymer such as polyester, for example PET, may have up to 250 or up to 200 repeat units (e.g. molecular weight of up to 25,000 or up to 20,000). The number of repeat units may be in the range 50-200, suitably 75-200, preferably 75-125 repeat units. A typical spinnable polymer may have about 100 repeat units. The condensation polymer may be linear and be able to reach the high levels of orientation and crystallinity which are induced during spinning and drawing processes.

Typical spinnable polyesters have an IV in the range 0.62 to 1dl/g. Preferred polyesters have an IV within the range of 0.5 to 1.2dl/g when measured using standard techniques (for example ASTM D4603 - 03).

Said apparatus may include a receptacle containing a fluid formulation for injection into molten polymer, for example via said injection device.

Said fluid formulation delivered in the method may have a viscosity of at least 5000cP, suitably at least 10000cP, preferably at least 15000cP. The viscosity may be less than 250,000cP.

Unless otherwise stated, viscosity described herein may be measured using a Brookfield Viscometer at 20 rpm and 20°C.

Said fluid formulation may include vehicle and one or more additives. An additive may be selected from colourants, UV filters, oxygen absorbers, antimicrobial agents, acetaldehyde scavengers, reheat additives, antioxidants, light stabilizers, optical brighteners, processing stabilizers and flame retardants. Said additive preferably includes one or more colourants comprising pigments or dyes. Said fluid formulation preferably includes a pigment

Said fluid formulation may include at least 20 wt%, preferably at least 35 wt%, more preferably at least 50 wt% of additives. Said formulation may include less than 85 wt% of additives. Said fluid formulation may include at least 15 wt% of liquid.

Preferably, said fluid formulation includes at least 20 wt% of colourant which may comprise one or more colourants. The total amounts of colourants in said fluid formulation may be at least 30 wt%, at least 45 wt% or at least 55 wt%. Colourants may be pigments or dyes. Said fluid formulation may include colourants which are insoluble in the vehicle at Standard Temperature and Pressure (STP) which is defined at 0°C and a pressure of 10⁵ Pa.

Said fluid formulation may include 15 to 80 wt% of vehicle and 20 to 85 wt% of additives.

Said fluid formulation may include a vehicle which is suitably a liquid at STP. Said vehicle preferably has a boiling point (at a pressure of 760mmHg) of greater than 300°C, preferably greater than 350°C, more preferably greater than 500°C. The boiling point may be less than 1150°C or less than 1000°C. The melting point of the vehicle may be less than 0°C or less than -10°C.

In a preferred embodiment, said containing means is an extruder and downstream thereof is a spinning means for spinning molten polymer which has been contacted with fluid formulation. By use of an assembly and/or apparatus as described, the injection of fluid formulation into molten polymer can be accurately controlled (which might otherwise be difficult if there was some partial blockage of the injection device or change in properties of the fluid formulation due to exposure to excessive temperature). Accurate control in the context of formulations used in spinning may be particularly important due to the fact that small changes in such formulations can result in defects in spun fibre, for example leading to breakage of fibre as it is produced.

According to a second aspect of the invention, there is provided a method of injecting a fluid formulation into molten polymer, the method comprising:
(i) selecting an assembly according to the first aspect;
(ii) with molten polymer arranged in said containing means and with cooling fluid arranged in said cooling fluid passageway, operating said injection device to deliver fluid formulation into the molten polymer.

Preferably, the method comprises causing cooling fluid to flow continuously in said cooling fluid passageway during the entirety of the time said injection device is delivering fluid formulation into the molten polymer.

The assembly of the second aspect may include any feature of the assembly of the first aspect.

According to a third aspect of the invention, there is provided a method of assembling an assembly according to the first aspect, the method comprising securing an injection device as described according to the first aspect relative to a containing means as described according to the first aspect.

The method may comprise selecting a conduit as described according to the first aspect and engaging said conduit in an opening, for example socket, defined in a wall (e.g. wall (A) described in said first aspect).

The method may comprise selecting a securement device as described according to the first aspect and using said securement device to releasably secure the conduit in position. The method preferably comprises screw-threadedly engaging the securement device in position, for example within a wall (e.g. wall (A)) of said containing means. The conduit is preferably a sliding fit in a wall (e.g. wall (A)) of said containing means. Said conduit is preferably not secured in said wall (e.g. wall (A)) of said containing means by engagement of any screw-threaded region of said conduit engaging any other screw-threaded region, for example any screw-threaded region defined in a wall (e.g. wall (A)) of said containing means.

The method preferably comprises defining at least part of the cooling fluid passageway arranged to contain cooling fluid by securing the securement device in position, for example around the conduit.

The method may comprise connecting the assembly to a source of molten polymer.

The method may comprise connecting the assembly to a source of cooling fluid.

Any feature of any invention or embodiment described herein may be combined with any other invention described herein *mutatis mutandis.*

Specific embodiments of the invention will now be described, by way of example, with reference to the accompanying drawings, in which:
Figure 1 is a schematic representation of apparatus for injecting a liquid formulation into molten polymer;
Figure 2 is a cross-section through an injector;
Figure 3 is a schematic representation of a conduit of an injector of a known apparatus engaged in a wall of an extruder;
Figures 4a and 4b are schematic representations of the conduit of the injector illustrating how the injector becomes blocked;
Figure 5a is a schematic representation of an assembly including a modified conduit of an injector, in accordance with a preferred of embodiment of the invention, engaged in a wall of an extruder;
Figure 5b is a schematic representation of a wall of the extruder prior to engagement with the assembly of figure 5a;
Figure 6a is a perspective view of a modified assembly for engagement to a wall of an extruder (but excluding a movable pin for opening/closing an outlet of a conduit of the assembly);
Figure 6b is a schematic cross-section through the assembly of Figure 6a (but including the movable pin);
Figure 6c is a cross-section along line Vlc-Vlc of Figure 6b; and
Figure 6d is an isometric view of the modified assembly (including movable pin).

In the figures, the same or similar parts are annotated with the same or similar reference numerals.

The following material is referred to hereinafter:
Formulation A1 - a proprietary liquid formulation including vehicle and a red dye.

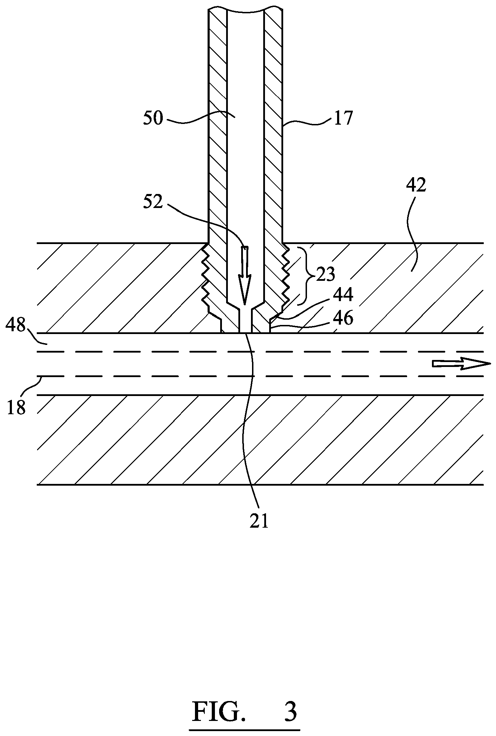

As described above with reference to Figures 1 and 2, injector 14 is arranged to control passage of liquid formulation, via conduit 17 and outlet 21, into pressurized molten polymer stream 18. As shown in Figure 3, conduit 17 includes outwardly facing, screw-threaded region 23 adjacent outlet 21 via which it can be releasably screw-engaged within a screw-threaded opening defined in metal wall 42 of extruder 19. Downstream of region 23, conduit 17 tapers inwardly to define a frusto-conical region 44 and, downstream thereof, it defines a cylindrical-region 46 in which outlet 21 is defined. Outlet 21 opens into passageway 48 which contains polymer steam 18. The regions 44, 46 are shaped to correspond to a conical seat defined in wall 42 of extruder 19 so the conduit can be tightened down onto the conical seat to prevent leakage of polymer from the extruder. In use, liquid formulation passes within passageway 50 defined in conduit 17 in the direction of arrow 52 towards outlet 21 from which it is injected into the polymer stream 18. A pin (not shown but analogous to pin 28 of Figure 2) is movable in conduit 17 to close/open outlet 21. The liquid formulation may be injected at pressures which can be in the range 50-200 bar or more.

It is found that, in use, metal wall 42 may be at a temperature of up to about 300°C by conduction of heat from molten polymer stream 18. In turn, tests have shown that conduit 17 can become heated to substantially the same temperature as the polymer stream. Some liquid formulations are found to be affected by this heating, notably Formulation A1, as described in Example 1 below.

### Example 1

A test-rig (not shown) comprises a heated block in which conduit 17 of an injector is screw-engaged in substantially the same manner as that described above with reference to Figure 3. The temperature of the block can be adjusted, as can the dosing rate of liquid formulation passing through the conduit. In addition, dosing can be stopped for measured periods and restarted, to simulate practical situations.

Liquid formulation A1 was assessed using the test-rig at a relevant dosing rate of 2.92 grams per minute (gpm) (this being equivalent to the lowest likely addition rate in practice) over a range of temperatures. Results of observations are provided in the table below.

| **Temp. (°C)** | **Observation** |
|---|---|
| 150 | Colourant a very soft paste in the test rig at the specified temperature. No fuming. No discolouration. No blocking. |
| 175 | Colourant a very soft paste in the test rig at the specified temperature. No fuming. No discolouration. No blocking. |
| 200 | Colourant appeared a slightly thicker paste in the test rig at the specified temperature. No fuming. No discolouration. No blocking. |
| 225 | Colourant caused a blockage on initial opening. Toggling injector pin freed blockage and dosing acceptable for remaining 10 minutes. Colourant a thicker paste at the specified temperature. No fuming. Slight discolouration (darker). |
| 250 | Colourant caused a blockage on initial opening; which was freed after toggling injector pin. After 10 minutes there was a slight pressure rise indicating some blocking occurring. Colourant thicker and darker in colour. No fuming. |
| 275 | Colour caused a blockage on initial opening. Toggling injector pin freed blockage for a short time, but after 1 minute there was complete blockage. Fuming present. Very thick paste and dark in colour. |

Thus, it should be appreciated from the above that the formulation described can, disadvantageously, cause blockages in the injector in certain circumstances, for example as it becomes heated to higher temperatures.

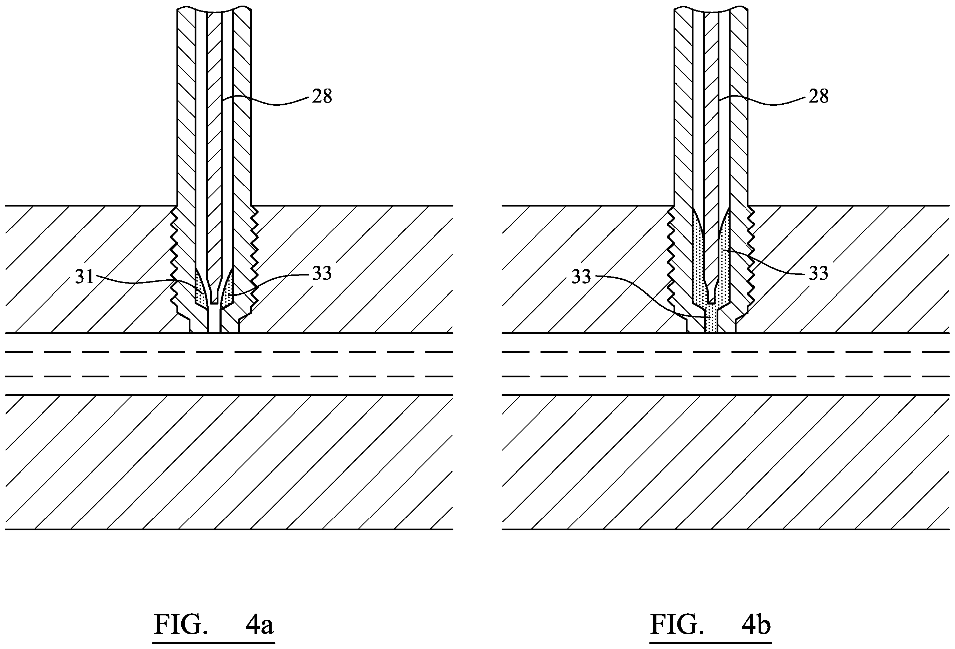

In a series of experiments, the reasons why the injector becomes blocked were investigated. As illustrated in Figure 4a, it was found that, initially, blocking by solid material (illustrated by reference numeral 33), originated on a ledge 31 which defines a seat for valve pin 28. Subsequently, there was a more extensive build-up of solid material resulting in complete blocking of the injector as illustrated by reference numeral 33 in Figure 4b. Subsequently described embodiments were developed to address the problem of blocking.

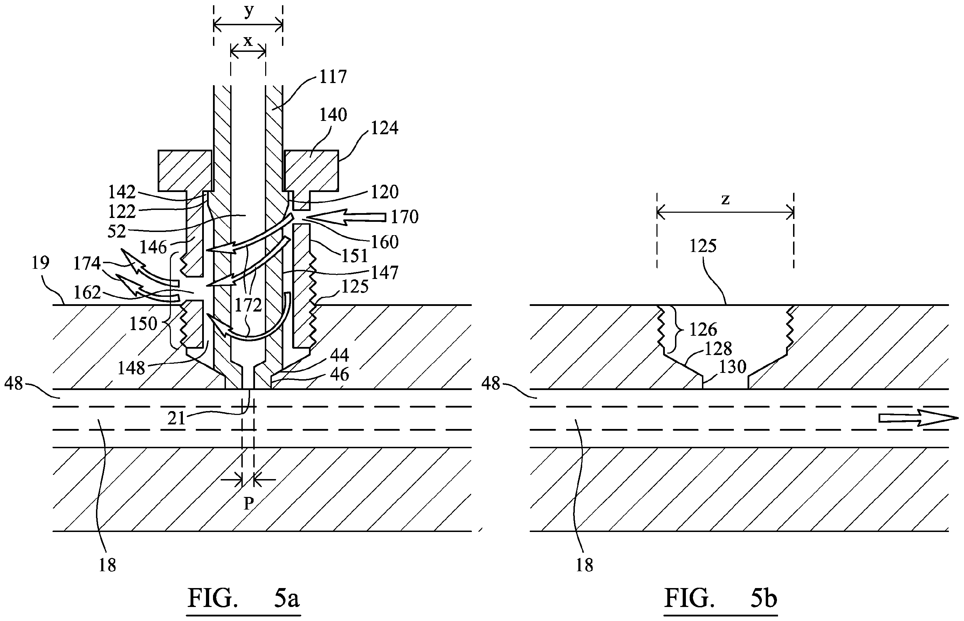

A first embodiment of the invention is shown in Figures 5a and 5b. Referring to the figures, conduit 117 is similar to conduit 17 of Figure 3 in that it includes frusto-conical region 44 and cylindrical region 46 which are shaped to correspond to a conical seat defined in wall 42 of extruder 19. However, conduit 117 does not itself include a screw-thread region, for example corresponding to region 23 in Figure 3.

The conduit 117 includes an annular collar 120 having an upwardly facing (as shown in Figure 5a) annular surface 122 which is arranged to bear against part of a sleeve nut 124 in use.

The conduit 117 is arranged within a port 125. An opening of port 125 which receives an assembly comprising conduit 117 and sleeve nut 124, is of a wider diameter compared to the diameter of the equivalent port in the Figure 3 embodiment.

The port 125 includes a wall 126 which is screw-threaded, defining a first cylindrical portion; a wall 128 defining a frusto-conical portion; and a wall 130 defining a second cylindrical portion. The sleeve nut 124 includes a head 140, a lower annular surface 142 of which is arranged to seat upon annular surface 122 of collar 120 of conduit 117. The sleeve nut 124 includes a cylindrical body 146 having an inwardly facing cylindrical wall which is arranged to define a cylindrical air gap 148 between itself and an outer wall 147 of conduit 117. Towards its distal end, in region 150, outer cylindrical wall 151 of the sleeve nut is screw-threaded and arranged to engage screw-threaded wall 126. Sleeve nut 124 also includes an air inlet 160 adjacent head 140 and an air outlet 162. The outlet 162 is offset relative to inlet 160 at approximately 180° about the periphery of cylindrical wall 151 and is axially spaced so outlet 162 extends through screw-threaded region 150 and, in use, is positioned adjacent an outer wall of extruder 19.

Dimensions of elements of assembly of the Figures 5a and 5b are as follows:
- internal diameter "x" of conduit 117 is about 8mm.
- external diameter "y" of conduit 117 is about 13mm.
- diameter "z" of port 125 is about 22mm
- diameter "p" of outlet 21 is about 3-4mm.

During assembly, regions 44, 46 of conduit 117 are seated on walls 128, 130 of port 125 with sleeve nut 124 pre-installed on conduit 117, the screw-threaded region 150 is engaged with screw-threaded wall 126 and the nut 124 tightened down to secure conduit 117 in position.

In use, cool compressed air is introduced into the assembly of Figure 5 in the direction of arrow 170. The air flows within annular air gap 148 as illustrated by arrows 172, thereby cooling conduit 117 (and liquid formulation therein). The heated air then passes out of the assembly via outlet 162 as illustrated by arrows 174.

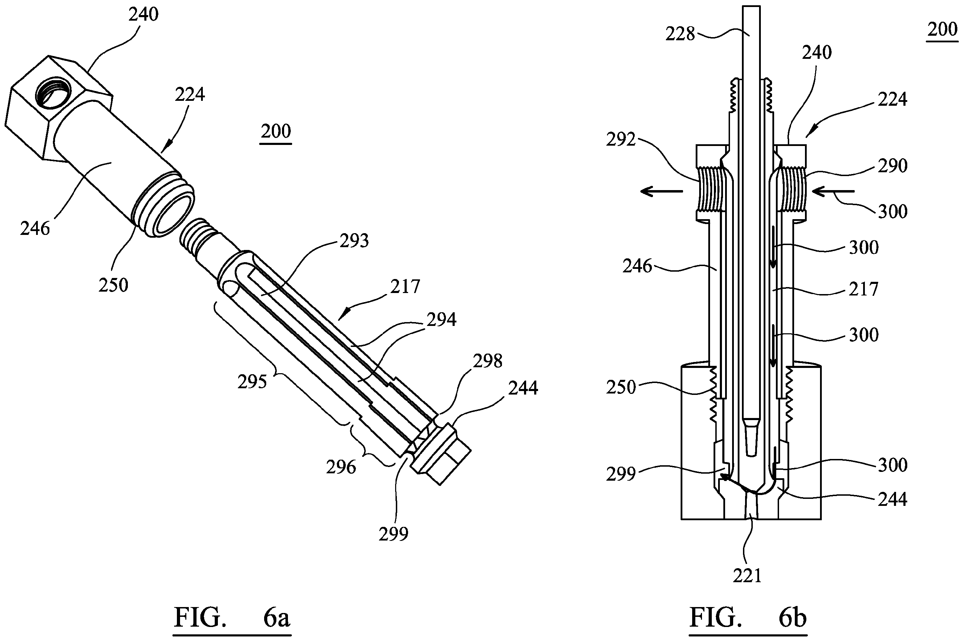

The assembly 200 of Figures 6a - 6d is similar to that of Figures 5a and 5b. Assembly 200 includes a sleeve nut 224 which includes a head 240, a cylindrical body 246 and a region 250 which is screw-threaded and arranged to engage screw-threaded wall 126 (Figure 5b) as described for the Figures 5a and 5b embodiment.

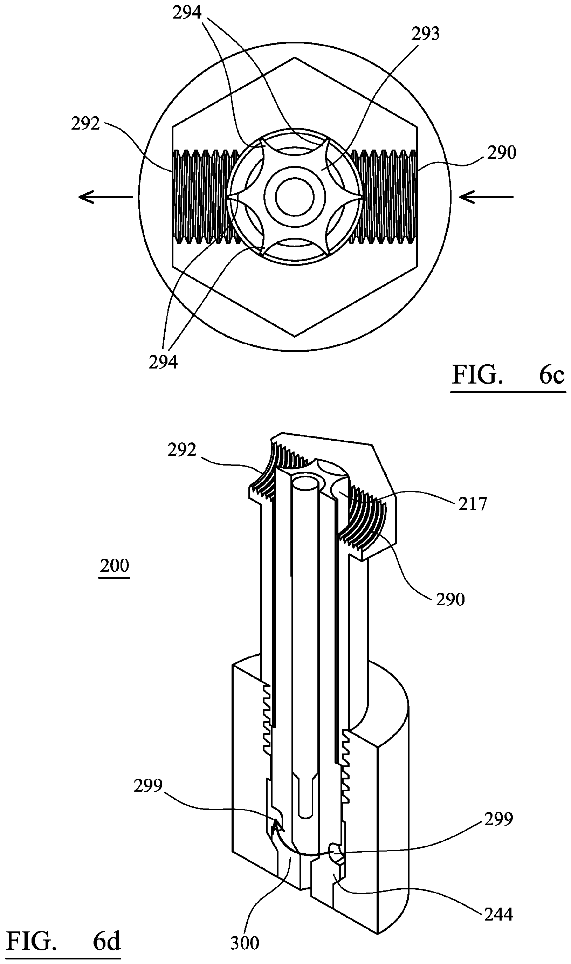

Head 240 includes an inlet 290 for compressed air and, diametrically opposed thereto, an outlet 292 (not shown in Figure 6a but shown in Figures 6b and 6c).

Conduit 217 is modified compared to conduit 117 of Figures 5a and 5b. In this regard, the conduit 217 includes a central hollow hub 293 from which a series of elongate, radially-extending vanes 294 project. In Figure 6c, six vanes 294 are illustrated, spaced apart at 60° around the hub 293.

Each vane 294 includes a step (along its elongate extent). Thus, each vane 294 includes a first thickness (measured radially) along a first portion 295 of its length and a second, wider thickness along a second portion 296 of its length. The increased thickness is arranged to fill a wider gap existing below nut 224 when the assembly 200 is fully assembled.

The vanes 294 co-operate to define passageways for compressed air. The passageways are defined between an outer surface of the conduit 217 and inwardly facing cylindrical wall 297 of cylindrical body 246 of sleeve nut 224. Beyond the distal ends 298 of the vanes an annular gap 299 is defined, the gap being defined inwards of annular region 244 of the conduit 217.

Figures 6b to 6d also include pin 228 which is movable within an elongate cylindrical opening in conduit 217 to close/open outlet 221.

In use, the assembly 200 is engaged in a port 125 as described for the Figure 5a and 5b embodiment. Then a compressed air supply is connected to inlet 290 and, in use, air is injected into the assembly. The air passes into the assembly as illustrated by arrows 300 in figures 6b and 6c. It passes down passageways defined by vanes 294 and through gap 299. Thereafter, the air passes up passageways defined by vanes 294 and out of the assembly via outlet 292. The arrangement of the vanes 294, gap 299, inlet 290 and outlet 292 promotes the flow of the air towards and away from outlet 221. Consequently, heat is removed from regions of the conduit 117 which are expected to become hottest and/or which are close to regions of the conduit which are found, as described with reference to Figures 4a and 4b, to be where blockages of the conduit start.

The apparatus of Figures 5 and 6 were tested as described in Examples 2 and 3.

### Example 2

Using the test-rig described in Example 1, the apparatus of Figures 5 and 6 were assessed over a range of different compressed air flow rates. Results are provided in the table below.

| Air flow rate (litres/minute) | Temperature adjacent injector tip (°C) | |
|---|---|---|
| | Embodiment of Figure 5 | Embodiment of Figure 6 |
| No air | 277 | 274 |
| 10 | 266 | 252 |
| 20 | 254 | 228 |
| 30 | 252 | 213 |

The results illustrate the preference to use air to cool the tip and that the embodiment of Figure 6 is improved relative to that of Figure 5.

### Example 3

The apparatus of Figures 5 and 6 was assessed, over a range of dosing rates, whilst injecting Formulation A1 into polymer in an extruder. In Figures 5 and 6, the air flow rate was 30 litres/minute. Results are provided in the table below.

| | Results | |
|---|---|---|
| Dosing rate of Formulation A-1 (grams per minute of formulation delivered) | Embodiment of Figure 5 | Embodiment of Figure 6 |
| 2.91 | No blockage | No blockage |
| 0.73 | Instant blockage | 20 minutes with one small blockage |

Given that the lowest expected dosing rate of formulation A-1 in a production environment is approximately 2.92 grams per minute, both the embodiments of Figures 5 and 6 would be suitable for commercial use. For lower dose rates, the embodiment of Figure 6 is preferred and/or the air flow rate may be increased.

## Claims

1. An assembly comprising:
(i) a containing means (19) for molten polymer;
(ii) apparatus (117,124;200) for injecting a fluid formulation into molten polymer contained in the containing means, wherein said apparatus is secured relative to the containing means;
(iii) wherein said apparatus includes an injection device (117;217) for injecting fluid formulation into molten polymer contained in the containing means;
(iv) wherein said injection device comprises a conduit (117;217) arranged to deliver fluid formulation into molten polymer in the containing means and a cooling fluid passageway associated with the conduit, said cooling fluid passageway (148;300) being arranged to contain a cooling fluid which is arranged, in use, to cool the conduit and/or a fluid formulation present therewithin;
**characterised in that**:
one wall W1 of the said cooling fluid passageway is defined, at least in part, by said conduit arranged to deliver fluid formulation into molten polymer, wherein wall W1 defines an internal wall of the cooling fluid passageway;
said conduit includes a wall having a first surface which is an internal surface of the conduit and is arranged to contact fluid formulation as it passes through the conduit prior to injection of the fluid formulation into molten polymer and said conduit includes a second surface (147; 294) which is an external surface of the conduit and/or faces outwardly and does not contact the fluid formulation as it passes through the conduit, wherein the arrangement is such that cooling fluid in the cooling fluid passageway in use directly contacts said second surface of said wall of said conduit;
a wall W2 of the cooling fluid passageway extends around the conduit and is arranged to contact cooling fluid in use, wherein wall W2 is part of a securement device (124; 224) by means of which the conduit of said injection device is secured in position; and
said securement device comprises a screw-threaded region (150; 250) which is arranged to screw-threadedly engage the containing means.

2. An assembly according to claim 1, wherein said containing means includes a wall (A) which defines a region for containing molten polymer, wherein said conduit (117;217) of said injection device extends within the wall (A), wherein said containing means (19) is part of an extruder;, wherein said conduit extends from a first side of wall (A) to a second side of wall (A), wherein said second side defines a passageway in which polymer (18) is disposed and/or flows in use, wherein said conduit includes an opening (21) via which fluid formulation is injected, in use, into molten polymer in the containing means, wherein said opening has a mouth which opens directly into a region in said containing means in which molten polymer flows and/or is positioned in use; wherein, optionally, said opening in said conduit is aligned with said second side of wall (A) and said opening preferably has a cross-sectional area at its narrowest point in the range 12mm² to 200mm².

3. An assembly according to claim 2, wherein said conduit includes an outer face which is at an extremity of the conduit and wherein said opening via which fluid formulation is injected, in use, into molten polymer extends through the outer face, wherein at least part of said outer face is contiguous with second side of wall (A); and/or.
wherein said conduit includes an outer face which is at an extremity of the conduit, wherein substantially no step is defined between the outer face of the conduit and the immediately surrounding area defined by the second side of wall (A).

4. An assembly according to any preceding claim, wherein at an end of said conduit which includes an outer face, the conduit defines a first cylindrical region (46; 244) which engages a corresponding opening in a wall (A) which defines a region of said containing means for containing molten polymer;
wherein an end of the conduit which includes an outer face thereof is seated upon a corresponding socket (128, 130) defined in the wall (A), wherein the socket includes an opening adjacent a second side of wall (A) and/or which opening opens into the passageway in which polymer flows in use;
wherein at said end of said conduit which includes said outer face, the conduit includes said first cylindrical region (46) and, upstream thereof, a second cylindrical region (44), wherein a step is arranged between the first and second cylindrical regions;
wherein, optionally, the first and second cylindrical regions are seated upon walls of said socket defined in the wall (A)

5. An assembly according to any preceding claim, wherein said conduit is not arranged to be directly screwed into a wall (A) of said containing means, wherein wall (A) defines a region of said containing means for containing molten polymer.

6. An assembly according to any preceding claim, wherein said containing means includes a wall (A) which includes a first side and a second side, where said second side defines a passageway in which polymer is disposed and/or flows, in use, wherein said cooling fluid passageway is arranged, at least in part, within wall (A), and extends between said first side and second side of wall (A), wherein said cooling fluid passageway (148;300) extends from a first position which is spaced from said first side of wall (A) to a second position which is within wall (A).

7. An assembly according to any preceding claim, wherein said second surface of said wall of said conduit includes a series of projections (294) which are elongate and extend in the direction of flow of cooling fluid through the cooling fluid passageway, wherein the projections define a series of flow channels.

8. An assembly according to any preceding claim, wherein said wall W2 is movable between an operative position in which it is secured within wall (A) and defines part of said cooling fluid passageway around the conduit and a second inoperative position wherein it is withdrawn from the operative position.

9. An assembly according to any preceding claim, wherein the securement device (124; 224) includes an inlet for passage of cooling fluid into said cooling fluid passageway (148; 299) and an outlet (162) for passage of cooling fluid out of the cooling fluid passageway.

10. An assembly according to any preceding claim, wherein said apparatus for injecting a fluid formulation comprises said conduit and said securement device, wherein said conduit defines a wall W1 of said passageway and said securement device defines wall W2 of said passageway, wherein said passageway is solely defined by the conduit and said securement device and no other component of the apparatus for injecting.

11. An assembly according to any preceding claim, wherein the assembly includes a pipe which is operatively connected to said cooling fluid passageway and said pipe is connected to a source of cooling fluid; and said containing means preferably contains molten polymer;
wherein said apparatus optionally includes a receptacle containing a fluid formulation for injection into molten polymer via said injection device, wherein said fluid formulation has a viscosity of at least 5000cP and less than 250,000cP, includes an additive which comprises one or more colourants comprising pigments or dyes and includes 15 to 80 wt% of vehicle and 20 to 85 wt% of additives.

12. An assembly according to any preceding claim, wherein said containing means is an extruder (19) and downstream thereof is a spinning means for spinning molten polymer which has been contacted with fluid formulation.

13. A method of injecting a fluid formulation into molten polymer, the method comprising:
(i) selecting an assembly according to any preceding claim,
(ii) with molten polymer arranged in said containing means and with cooling fluid arranged in said cooling fluid passageway, operating said injection device to deliver fluid formulation into the molten polymer; and, optionally,
(iii) causing cooling fluid to flow continuously in said cooling fluid passageway during the entirety of the time said injection device is delivering fluid formulation into the molten polymer.

14. A method of assembling an assembly according to any of claims 1 to 12, the method comprising securing an injection device according to any of claims 1 to 12 relative to a containing means.

## Patentansprüche

1. Baugruppe, umfassend:
(i) eine Behältereinrichtung (19) für geschmolzenes Polymer;
(ii) eine Vorrichtung (117, 124; 200) zum Einspritzen einer Fluidformulierung in geschmolzenes Polymer, das in der Behältereinrichtung enthalten ist, wobei die Vorrichtung relativ zu der Behältereinrichtung befestigt ist;
(iii) wobei die Vorrichtung eine Einspritzvorrichtung (117; 217) zum Einspritzen von Fluidformulierung in geschmolzenes Polymer, das in der Behältereinrichtung enthalten ist, aufweist;
(iv) wobei die Einspritzvorrichtung eine Leitung (117; 217), die zum Abgeben von Fluidformulierung in geschmolzenes Polymer in der Behältereinrichtung beschaffen ist, und einen Kühlfluidkanal, der mit der Leitung verbunden ist, umfasst, wobei der Kühlfluidkanal (148; 300) dafür beschaffen ist, ein Kühlfluid zu enthalten, das dafür beschaffen ist, in Verwendung die Leitung und/oder eine darin vorhandene Fluidformulierung zu kühlen;
**dadurch gekennzeichnet, dass**:
eine Wand W1 des Kühlfluidkanales wenigstens zum Teil von der Leitung definiert ist, die dafür beschaffen ist, Fluidformulierung in geschmolzenes Polymer abzugeben, wobei die Wand W1 eine Innenwand des Kühlfluidkanales definiert;
die Leitung eine Wand aufweist, die eine erste Oberfläche aufweist, die eine Innenoberfläche der Leitung ist und zum Kontakt mit Fluidformulierung, wenn diese durch die Leitung tritt, bevor die Fluidformulierung in geschmolzenes Polymer eingespritzt wird, beschaffen ist, und die Leitung eine zweite Oberfläche (147; 294) aufweist, die eine Außenoberfläche der Leitung ist und/oder nach außen zeigt und nicht in Kontakt mit der Fluidformulierung steht, wenn diese durch die Leitung tritt, wobei die Anordnung so ist, dass Kühlfluid in dem Kühlfluidkanal in Verwendung direkt mit der zweiten Oberfläche der Wand der Leitung in Kontakt steht;
eine Wand W2 des Kühlfluidkanales um die Leitung verläuft und zum Kontakt mit Kühlfluid in Verwendung beschaffen ist, wobei die Wand W2 Teil einer Befestigungsvorrichtung (124; 224) ist, mithilfe derer die Leitung der Einspritzvorrichtung in Position gehalten wird; und
die Befestigungsvorrichtung einen Gewindeteil (150; 250) umfasst, der zum Gewindeeingriff mit der Behältereinrichtung beschaffen ist.

2. Baugruppe gemäß Anspruch 1, wobei die Behältereinrichtung eine Wand (A) aufweist, die einen Bereich zum Enthalten von geschmolzenem Polymer definiert, wobei die Leitung (117; 217) der Einspritzvorrichtung in der Wand (A) verläuft, wobei die Behältereinrichtung (19) ein Teil eines Extruders ist; wobei die Leitung von einer ersten Seite der Wand (A) zu einer zweiten Seite der Wand (A) verläuft, wobei die zweite Seite einen Kanal definiert, in dem das Polymer (18) angeordnet ist und/oder in Verwendung fließt, wobei die Leitung eine Öffnung (21) aufweist, durch die in Verwendung Fluidformulierung in geschmolzenes Polymer in der Behältereinrichtung eingespritzt wird, wobei die Öffnung eine Mündung aufweist, die sich direkt in einen Bereich in der Behältereinrichtung öffnet, in dem geschmolzenes Polymer fließt und/oder in Verwendung angeordnet ist; wobei gegebenenfalls die Öffnung in der Leitung mit der zweiten Seite der Wand (A) fluchtet und die Öffnung vorzugsweise eine Querschnittsfläche aufweist, die an ihrer engsten Stelle in dem Bereich von 12 mm² bis 200 mm² liegt.

3. Baugruppe gemäß Anspruch 2, wobei die Leitung eine Außenseite aufweist, die an dem Ende der Leitung liegt, und wobei die Öffnung, durch die in Verwendung Fluidformulierung in geschmolzenes Polymer eingespritzt wird, durch die Außenseite verläuft, wobei wenigstens ein Teil der Außenseite an die zweite Seite der Wand (A) angrenzt; und/oder
wobei die Leitung eine Außenseite aufweist, die an dem Ende der Leitung liegt, wobei im Wesentlichen keine Stufe zwischen der Außenseite der Leitung und der unmittelbar umgebenden, von der zweiten Seite der wand (A) definierten Fläche definiert ist.

4. Baugruppe gemäß einem der vorstehenden Ansprüche, wobei an einem Ende der Leitung, die eine Außenseite aufweist, die Leitung einen ersten zylindrischen Bereich (46; 244) definiert, der mit einer entsprechenden Öffnung in einer Wand (A) in Eingriff steht, die einen Bereich der Behältereinrichtung zum Enthalten von geschmolzenem Polymer definiert;
wobei ein Ende der Leitung, die eine Außenseite davon aufweist, auf einer entsprechenden Buchse (128, 130), die in der Wand (A) definiert ist, ruht, wobei die Buchse eine Öffnung benachbart zu einer zweiten Seite der Wand (A) aufweist, und/oder welche Öffnung sich in den Kanal öffnet, in dem in Verwendung Polymer fließt;
wobei an dem Ende der Leitung, die die Außenseite aufweist, die Leitung den ersten zylindrischen Bereich (46) und stromaufwärts davon einen zweiten zylindrischen Bereich (44) aufweist, wobei eine Stufe zwischen dem ersten zylindrischen Bereich und dem zweiten zylindrischen Bereich angeordnet ist;
wobei gegebenenfalls der erste und der zweite zylindrische Bereich auf Wänden der in der Wand (A) definierten Buchse ruhen.

5. Baugruppe gemäß einem der vorstehenden Ansprüche, wobei die Leitung nicht dafür beschaffen ist, direkt in eine Wand (A) der Behältereinrichtung geschraubt zu werden, wobei die Wand (A) einen Bereich der Behältereinrichtung zum Enthalten von geschmolzenem Polymer definiert.

6. Baugruppe gemäß einem der vorstehenden Ansprüche, wobei die Behältereinrichtung eine Wand (A) aufweist, die eine erste und eine zweite Seite aufweist, wobei die zweite Seite einen Kanal definiert, in dem in Verwendung Polymer angeordnet ist und/oder fließt, wobei der Kühlfluidkanal wenigstens zum Teil innerhalb der Wand (A) angeordnet ist und zwischen der ersten Seite und der zweiten Seite der Wand (A) verläuft, wobei der Kühlfluidkanal (148; 300) von einer ersten Position, die von der ersten Seite der Wand (A) beabstandet ist, zu einer zweiten Position, die innerhalb der Wand (A) liegt, verläuft.

7. Baugruppe gemäß einem der vorstehenden Ansprüche, wobei die zweite Oberfläche der Wand der Leitung eine Reihe von Vorsprüngen (294) aufweist, die langgestreckt sind und in der Flussrichtung von Kühlfluid durch den Kühlfluidkanal verlaufen, wobei die Vorsprünge eine Reihe von Flusskanälen definieren.

8. Baugruppe gemäß einem der vorstehenden Ansprüche, wobei die Wand W2 zwischen einer Arbeitsstellung, in der sie innerhalb der Wand (A) befestigt ist und einen Teil des Kühlfluidkanals um die Leitung definiert, und einer zweiten, funktionslosen Stellung, in der sie von der Arbeitsstellung zurückgezogen ist, beweglich ist.

9. Baugruppe gemäß einem der vorstehenden Ansprüche, wobei die Befestigungsvorrichtung (124; 224) einen Einlass zum Durchtreten von Kühlfluid in den Kühlfluidkanal (148; 299) und einen Auslass (162) zum Austreten von Kühlfluid aus dem Kühlfluidkanal aufweist.

10. Baugruppe gemäß einem der vorstehenden Ansprüche, wobei die Vorrichtung zum Einspritzen einer Fluidformulierung die Leitung und die Befestigungsvorrichtung umfasst, wobei die Leitung eine Wand W1 des Kanals definiert und die Befestigungsvorrichtung eine Wand W2 des Kanals definiert, wobei der Kanal ausschließlich von der Leitung und der Befestigungsvorrichtung und keiner anderen Komponente der Vorrichtung zum Einspritzen definiert wird.

11. Baugruppe gemäß einem der vorstehenden Ansprüche, wobei die Baugruppe ein Rohr aufweist, das funktionsfähig mit dem Kühlfluidkanal verbunden ist, und das Rohr mit einer Kühlfluidquelle verbunden ist; und die Behältereinrichtung vorzugsweise geschmolzenes Polymer enthält;
wobei die Vorrichtung gegebenenfalls eine Aufnahme aufweist, die eine Fluidformulierung zum Einspritzen in geschmolzenes Polymer über die Einspritzvorrichtung enthält, wobei die Fluidformulierung eine Viskosität von wenigstens 5000 cP und weniger als 250.000 cP aufweist, einen Zusatzstoff enthält, der einen oder mehrere Farbstoffe, umfassend Pigmente oder Farbstoffe, umfasst und 15 bis 80 Gew.-% Träger und 20 bis 85 Gew.-% Zusatzstoffe enthält.

12. Baugruppe gemäß einem der vorstehenden Ansprüche, wobei die Behältereinrichtung ein Extruder (19) ist und stromabwärts davon eine Spinneinrichtung zum Spinnen von geschmolzenem Polymer, das mit Fluidformulierung in Kontakt gebracht worden ist, angeordnet ist.

13. Verfahren zum Einspritzen einer Fluidformulierung in geschmolzenes Polymer, wobei das Verfahren umfasst:
(i) Auswählen einer Baugruppe gemäß einem der vorstehenden Ansprüche;
(ii) Betreiben der Einspritzvorrichtung mit in der Behältereinrichtung angeordnetem geschmolzenem Polymer und mit in dem Kühlfluidkanal angeordnetem Kühlfluid, um Fluidformulierung in das geschmolzene Polymer abzugeben; und gegebenenfalls
(iii) Bewirken, dass während der gesamten Zeit, in der die Einspritzvorrichtung Fluidformulierung in das geschmolzene Polymer abgibt, Kühlfluid kontinuierlich in dem Kühlfluidkanal fließt.

14. Verfahren zum Zusammensetzen einer Baugruppe gemäß einem der Ansprüche 1 bis 12, wobei das Verfahren Befestigen einer Einspritzvorrichtung gemäß einem der Ansprüche 1 bis 12 relativ zu einer Behältereinrichtung umfasst.

## Revendications

1. Ensemble comprenant :
(i) un moyen faisant contenant (19) pour un polymère fondu ;
(ii) un appareil (117, 124 ; 200) pour injecter une formulation fluide à l'intérieur d'un polymère fondu contenu dans le moyen faisant contenant, ledit appareil étant fixé par rapport au moyen faisant contenant ;
(iii) dans lequel ledit appareil comporte un dispositif d'injection (117 ; 217) pour injecter une formulation fluide à l'intérieur d'un polymère fondu contenu dans le moyen faisant contenant ;
(iv) dans lequel ledit dispositif d'injection comprend une conduite (117 ; 217) agencée pour délivrer une formulation fluide à l'intérieur d'un polymère fondu dans le moyen faisant contenant et un passage de fluide frigorigène associé à la conduite, ledit passage de fluide frigorigène (148 ; 300) étant agencé pour contenir un fluide frigorigène qui est agencé, à l'usage, pour refroidir la conduite et/ou une formulation fluide présente à l'intérieur ;
**caractérisé en ce que** :
une paroi W1 dudit passage de fluide frigorigène est définie, au moins en partie, par ladite conduite agencée pour délivrer une formulation fluide à l'intérieur d'un polymère fondu, la paroi W1 définissant une paroi interne du passage de fluide frigorigène ;
ladite conduite comporte une paroi ayant une première surface qui est une surface interne de la conduite et est agencée pour être en contact avec une formulation fluide lorsqu'elle passe à travers la conduite avant l'injection de la formulation fluide à l'intérieur d'un polymère fondu et ladite conduite comporte une deuxième surface (147 ; 294) qui est une surface externe de la conduite et/ou est tournée vers l'extérieur et n'est pas en contact avec la formulation fluide lorsqu'elle passe à travers la conduite, l'agencement étant tel qu'un fluide frigorigène dans le passage de fluide frigorigène à l'usage est en contact direct avec ladite deuxième surface de ladite paroi de ladite conduite ;
une paroi W2 du passage de fluide frigorigène s'étend autour de la conduite et est agencée pour être en contact avec le fluide frigorigène à l'usage, la paroi W2 faisant partie d'un dispositif de fixation (124 ; 224) au moyen duquel la conduite dudit dispositif d'injection est fixée en position ; et
ledit dispositif de fixation comprend une région filetée (150 ; 250) qui est agencée pour s'enclencher par vissage avec le moyen faisant contenant.

2. Ensemble selon la revendication 1, dans lequel ledit moyen faisant contenant comporte une paroi (A) qui définit une région destinée à contenir un polymère fondu, dans lequel ladite conduite (117 ; 217) dudit dispositif d'injection s'étend à l'intérieur de la paroi (A), dans lequel ledit moyen faisant contenant (19) fait partie d'une extrudeuse, dans lequel ladite conduite s'étend d'un premier côté de la paroi (A) à un deuxième côté de la paroi (A), dans lequel ledit deuxième côté définit un passage dans lequel un polymère (18) est disposé et/ou s'écoule à l'usage, dans lequel ladite conduite comporte une ouverture (21) par laquelle une formulation fluide est injectée, à l'usage, à l'intérieur d'un polymère fondu dans le moyen faisant contenant, dans lequel ladite ouverture a un bec qui s'ouvre directement dans une région dans ledit moyen faisant contenant dans laquelle un polymère fondu s'écoule et/ou est positionné à l'usage ; éventuellement dans lequel ladite ouverture dans la conduite est alignée avec ledit deuxième côté de la paroi (A) et ladite ouverture a de préférence une aire de section transversale à son point le plus étroit dans la gamme de 12 mm² à 200 mm².

3. Ensemble selon la revendication 2, dans lequel ladite conduite comporte une face externe qui est à une extrémité de la conduite et dans lequel ladite ouverture par laquelle une formulation fluide est injectée, à l'usage, à l'intérieur d'un polymère fondu s'étend à travers la face externe, dans lequel au moins une partie de ladite face externe est contiguë au deuxième côté de la paroi (A) ; et/ou
dans lequel ladite conduite comporte une face externe qui est à une extrémité de la conduite, dans lequel sensiblement aucune marche n'est définie entre la face externe de la conduite et la zone immédiatement environnante définie par le deuxième côté de la paroi (A).

4. Ensemble selon une quelconque revendication précédente, dans lequel, à une extrémité de ladite conduite qui comporte une face externe, la conduite définit une première région cylindrique (46 ; 244) qui s'enclenche avec une ouverture correspondante dans une paroi (A) qui définit une région dudit moyen faisant contenant destinée à contenir un polymère fondu ;
dans lequel une extrémité de la conduite qui comporte une face externe de celle-ci est placée sur une douille correspondante (128, 130) définie dans la paroi (A), dans lequel la douille comporte une ouverture adjacente à un deuxième côté de la paroi (A) et/ou laquelle ouverture s'ouvre à l'intérieur du passage dans lequel un polymère s'écoule à l'usage ;
dans lequel, à ladite extrémité de ladite conduite qui comporte ladite face externe, ladite conduite comporte ladite première région cylindrique (46) et, en amont de celle-ci, une deuxième région cylindrique (44), dans lequel une marche est disposée entre les première et deuxième régions cylindriques ;
éventuellement dans lequel les première et deuxième régions cylindriques sont placées sur des parois de ladite douille définie dans la paroi (A).

5. Ensemble selon une quelconque revendication précédente, dans lequel ladite conduite n'est pas agencée pour être directement vissée à l'intérieur d'une paroi (A) dudit moyen faisant contenant, dans lequel la paroi (A) définit une région dudit moyen faisant contenant destinée à contenir un polymère fondu.

6. Ensemble selon une quelconque revendication précédente, dans lequel ledit moyen faisant contenant comporte une paroi (A) qui comporte un premier côté et un deuxième côté, dans lequel ledit deuxième côté définit un passage dans lequel un polymère est disposé et/ou s'écoule à l'usage, dans lequel ledit passage de fluide frigorigène est disposé, au moins en partie, à l'intérieur de la paroi (A), et s'étend entre ledit premier côté et ledit deuxième côté de la paroi (A), dans lequel ledit passage de fluide frigorigène (148 ; 300) s'étend depuis une première position qui est espacée dudit premier côté de la paroi (A) jusqu'à une deuxième position qui est à l'intérieur de la paroi (A).

7. Ensemble selon une quelconque revendication précédente, dans lequel ladite deuxième surface de ladite paroi de ladite conduite comporte une série de saillies (294) qui sont allongées et s'étendent dans la direction d'écoulement du fluide frigorigène à travers le passage de fluide frigorigène, dans lequel les saillies définissent une série de canaux d'écoulement.

8. Ensemble selon une quelconque revendication précédente, dans lequel ladite paroi W2 est mobile entre une position opérationnelle dans laquelle elle est fixée à l'intérieur de la paroi (A) et définit une partie dudit passage de fluide frigorigène autour de la conduite et une deuxième position inopérante dans laquelle elle est retirée de la position opérationnelle.

9. Ensemble selon une quelconque revendication précédente, dans lequel le dispositif de fixation (124 ; 224) comporte une entrée pour le passage d'un fluide frigorigène à l'intérieur dudit passage de fluide frigorigène (148 ; 299) et une sortie (162) pour le passage du fluide frigorigène hors du passage de fluide frigorigène.

10. Ensemble selon une quelconque revendication précédente, dans lequel ledit appareil pour injecter une formulation fluide comprend ladite conduite et ledit dispositif de fixation, dans lequel ladite conduite définit une paroi W1 dudit passage et ledit dispositif de fixation définit une paroi W2 dudit passage, dans lequel ledit passage est uniquement défini par la conduite et ledit dispositif de fixation et aucun autre composant de l'appareil d'injection.

11. Ensemble selon une quelconque revendication précédente, dans lequel l'ensemble comporte un tuyau qui est fonctionnellement raccordé audit passage de fluide frigorigène et ledit tuyau est raccordé à une source de fluide frigorigène ; et ledit moyen faisant contenant contient de préférence un polymère fondu ;
dans lequel ledit appareil comporte éventuellement un récipient contenant une formulation fluide destinée à être injectée à l'intérieur d'un polymère fondu par le biais dudit dispositif d'injection, dans lequel ladite formulation fluide a une viscosité d'au moins 5000 cP et de moins de 250 000 cP, comporte un additif qui comprend un ou plusieurs colorants comprenant des pigments ou des teintures et comporte 15 à 80 % en poids de véhicule et 20 à 85 % en poids d'additifs.

12. Ensemble selon une quelconque revendication précédente, dans lequel ledit moyen faisant contenant est une extrudeuse (19), et en aval de celle-ci se trouve un moyen de filage pour filer un polymère fondu qui a été mis en contact avec une formulation fluide.

13. Procédé d'injection d'une formulation fluide à l'intérieur d'un polymère fondu, le procédé comprenant :
(i) la sélection d'un ensemble selon une quelconque revendication précédente,
(ii) avec un polymère fondu disposé dans ledit moyen faisant contenant et avec un fluide frigorigène disposé dans ledit passage de fluide frigorigène, le fonctionnement dudit dispositif d'injection pour délivrer la formulation fluide à l'intérieur du polymère fondu ; et, éventuellement,
(iii) la mise en circulation continue du fluide frigorigène dans ledit passage de fluide frigorigène pendant la totalité du temps où ledit dispositif d'injection délivre la formulation fluide à l'intérieur du polymère fondu.

14. Procédé d'assemblage d'un ensemble selon l'une quelconque des revendications 1 à 12, le procédé comprenant la fixation d'un dispositif d'injection selon l'une quelconque des revendications 1 à 12 par rapport à un moyen faisant contenant.
